# EUROPÄISCHE PATENTANMELDUNG

(11) **EP 3 608 133 A1**
(43) Veröffentlichungstag der Anmeldung: **12.02.2020**
(21) Anmeldenummer: 19187722.4
(22) Anmeldetag: 23.07.2019
(51) Int. Cl.: B60J 3/04, B60R 1/00

(54) **VERDUNKELUNGSVORRICHTUNG FÜR EINE ADAS-KAMERA, STEUERGERÄT FÜR EIN ADAS-KAMERASYSTEM, ADAS-KAMERASYSTEM UND FAHRZEUG UMFASSEND EIN ADAS-KAMERASYSTEM**

(30) Priorität: 06.08.2018 DE 102018213078
(71) Anmelder: ZF Friedrichshafen AG, 88046 Friedrichshafen (DE)
(72) Erfinder: Rakoczi, Viktor, 88090 Immenstaad am Bodensee (DE)

(57) **Zusammenfassung**

Verdunkelungsvorrichtung (10) für eine ADAS-Kamera (31), wobei eine Flächengröße der Verdunkelungsvorrichtung (10) gleich der Größe des Sichtfeldes der ADAS-Kamera (31) auf einer Innenseite (3) einer Frontscheibe (2a) oder Heckscheibe (2b) eines Fahrzeuges (1) ist, umfassend eine an der Innenseite (3) anordenbare Schicht (11) umfassend Flüssigkristallzellen (12), wobei die Flüssigkristallzellen (12) einzeln ansteuerbar sind und bei Anliegen einer Spannung Licht absorbieren, um in Abhängigkeit einer von der ADAS-Kamera (31) erfassten Sonnenposition ein Bildausschnitt der ADAS-Kamera (31) zu verdunkeln, eine Verzögerungsschicht (13), angeordnet zwischen der Schicht (11) und der ADAS-Kamera (31), um der ADAS-Kamera (31) polarisiertes Licht unabhängig von einer Ausrichtung der Flüssigkristallzellen (12) relativ zu der ADAS-Kamera (31) bereitzustellen. Ferner bezieht sich die Erfindung auf Steuergerät (20, 20a, 20b) für ein ADAS-Kamerasystem (30), ein ADAS-Kamerasystem (30) und ein Fahrzeug (1) umfassend ein ADAS-Kamerasystem (30).

## Beschreibung

Die Erfindung bezieht sich auf eine Verdunkelungsvorrichtung für eine ADAS-Kamera nach Anspruch 1. Ferner bezieht sich die Erfindung auf ein Steuergerät für ein ADAS-Kamerasystem nach Anspruch 6. Außerdem bezieht sich die Erfindung auf ein ADAS-Kamerasystem nach Anspruch 7. Des Weiteren bezieht sich die Erfindung auf ein Fahrzeug nach Anspruch 9 umfassend ein erfindungsgemäßes ADAS-Kamerasystem.

Nachteile optischer Sensoren im Bereich Fahrerassistenzsysteme, im Englischen advanced driver assistance systems, abgekürzt ADAS, genannt, sind die vielfältigen Umweltbedingungen in ihrem Einsatz. Als Beispiele seien Sichteinschränkung der Kameras bedingt durch Verschmutzungen, starke Blendungen infolge der tiefstehenden Sonne, Lichtschwerter oder eingeschlossene Reflexionen im Bereich der Streulichtblende und/oder im Objektiv der Kamera selbst genannt.

Die DE 10 2017 118 506 A1 offenbart ein Fenstersystem für einen Fahrgastraum eines Fahrzeuges. Mittels elektrochromen Zellen wird die Transparenz eines Fensters reduziert zum Reduzieren der Intensität des einfallenden Lichts.

Allerdings sind die in DE 10 2017 118 506 A1 beschriebenen elektrochromen Zellen nicht für eine Anwendung bei Kameras im automotive Bereich geeignet. Wolframtrioxid wird bei Anliegen einer elektrischen Spannung aktiv und verfärbt sich blau. Eine Wolframtrioxid Beschichtung in einem ADAS-Kamerasystem würde damit die Farbwahrnehmung eines Bildsensors einer ADAS-Kamera verändern. Farbstoff dotierte polymerverteilte Flüssigkristalle sind im nicht Strom beaufschlagten Zustand lichtundurchlässig und transparent, wenn sie Strom beaufschlagt sind. Beim Wegbruch einer elektrischen Spannung im Fahrzeug würde mit einem derartigen Flüssigkristall bei Verwendung mit einer ADAS-Kamera kein Licht zu dem Bildsensor weitergeleitet werden. Dies ist aus Gründen der funktionalen Sicherheit für eine ADAS-Kamera nicht akzeptabel. Ein weiteres Problem bei der Verwendung von Flüssigkristallen ist deren Eigenschaft, einfallendes Licht linear zu polarisieren. Oberflächen von Bauelementen von Kameras sind in der Regel so gefertigt, dass sie möglichst alle Polarisationsrichtungen reflektieren oder transmittieren. Jedoch gibt es in einigen Fällen Vorzugsrichtungen, die abhängig von der Orientierung der Flüssigkristalle relativ zu der Kamera fehlen können, insbesondere wenn linear polarisiertes Licht in die Kamera einfällt. Linear polarisiertes Licht führt damit in bestimmten Bauelementen von Kameras zu falschen Messergebnissen.

Hier setzt die Erfindung an. Der Erfindung hat die Aufgabe zugrunde gelegen, für ADAS-Kameras eine objektseitige selektive und dynamische Abschattung gegen starke Blendungen infolge der tiefstehenden Sonne bereitzustellen, die den Anforderungen im Automotive Bereich, insbesondere funktionaler Sicherheit, genügt.

Die Aufgabe wird gelöst durch eine Verdunkelungsvorrichtung für eine ADAS-Kamera mit den Merkmalen des Anspruchs 1. Ferner wird die Aufgabe gelöst durch ein Steuergerät für ein ADAS-Kamerasystem mit den Merkmalen des Anspruchs 6. Außerdem wird die Aufgabe gelöst durch ein ADAS-Kamerasystem mit den Merkmalen des Anspruchs 7. Des Weiteren wird die Aufgabe gelöst durch ein Fahrzeug mit den Merkmalen des Anspruchs 9 umfassend ein erfindungsgemäßes ADAS-Kamerasystem.

Die erfindungsgemäße Verdunkelungsvorrichtung ist für eine ADAS-Kamera vorgesehen. Eine Flächengröße der Verdunkelungsvorrichtung ist gleich der Größe des Sichtfeldes der ADAS-Kamera auf einer Innenseite einer Frontscheibe oder Heckscheibe eines Fahrzeuges. Die Verdunkelungsvorrichtung umfasst eine an der Innenseite anordenbare Schicht. Die Schicht umfasst Flüssigkristallzellen. Die Flüssigkristallzellen sind einzeln ansteuerbar. Bei Anliegen einer Spannung absorbieren die Flüssigkristallzellen Licht, um in Abhängigkeit einer von der ADAS-Kamera erfassten Sonnenposition ein Bildausschnitt der ADAS-Kamera zu verdunkeln. Ferner umfasst die Verdunkelungsvorrichtung eine Verzögerungsschicht. Die Verzögerungsschicht ist angeordnet zwischen der Schicht und der ADAS-Kamera, um der ADAS-Kamera Licht unabhängig von einer Ausrichtung der Flüssigkristallzellen relativ zu der ADAS-Kamera bereitzustellen.

Eine Verdunkelungsvorrichtung entspricht im Wesentlichen einer Feldblende. Eine Feldblende begrenzt einen Bildausschnitt, ohne sich auf die Helligkeit des Bildes auszuwirken. Mit der erfindungsgemäßen Verdunkelungsvorrichtung kann aber auch die Bildhelligkeit gezielt beeinflusst werden. Zum Beispiel ändert sich die Bildhelligkeit bei einem hochfrequenten AUS/EIN- Betrieb der Flüssigkristallzellen. Die Verdunkelungsvorrichtung ist beispielsweise als eine Folie ausgeführt, die an die Innenseite klebbar ist. Die Flächengröße der Verdunkelungsvorrichtung bezeichnet den Flächeninhalt der Fläche, mit der die Verdunkelungsvorrichtung auf der Innenseite aufliegt. Die Verdunkelungsvorrichtung hat zum Beispiel die Form eines Trapezes. Die Verdunkelungsvorrichtung ist insbesondere planar bündig auf der Innenseite der Frontscheibe angeordnet. So werden eingeschlossene Reflexionen zwischen den einzelnen Schichten auf ein Minimum reduziert.

Vorteilhafterweise sind die Oberfläche der Innenseite des Fahrzeugs und der zur Innenseite der Frontscheibe oder Heckscheibe zugewandten Seite der Flüssigkristallträgerschicht mit einer Antireflex-Schicht Reflexionen entgegen vergütet. Die Antireflex-Schicht ist auf die Wellenlänge des Einsatzbereiches des Bildsensors der ADAS-Kamera abgestimmt. Die Schicht, die die Flüssigkristallzellen umfasst, wird auch Flüssigkristallträgerschicht oder Flüssigkristallschicht genannt.

Eine ADAS-Kamera ist eine Kamera eines Fahrerassistenzsystems, im Englischen advanced driver assistance systems, abgekürzt ADAS, genannt.

ADAS umfassen wenigstens eine Umfelderfassungseinrichtung. Die ADAS-Kamera ist eine Umfelderfassungseinrichtung. Ferner umfassen ADAS wenigstens ein Steuergerät, das Informationen der Umfelderfassungseinrichtung auswertet und in Abhängigkeit davon Fahrzeugsteuersignale erzeugt, um das Fahrzeug assistiert, teilautomatisiert bis hin zu vollautomatisiert zu fahren. Vollautomatisiert entspricht autonomen Fahren. Die Fahrzeugsteuersignale werden von Aktuatoren als Fahrzeugsteuerungsbefehle, das heißt in Eingriffe in Längs- und Querführung, ausgeführt.

Die ADAS-Kamera umfasst eine oder mehrere Linsen, zum Beispiel drei Linsen, nämlich eine Weitwinkellinse für den Nahbereich, eine Linse mit Normalbrennweite für einen mittleren Bereich und eine Telelinse für den Fernbereich. Außerdem umfasst die Kamera einen Bildsensor. Die mit der ADAS-Kamera erhaltenen Aufnahmen werden von einer Recheneinheit, beispielsweise einem Prozessor, ausgewertet, insbesondere werden Gegenstände identifiziert, zum Beispiel mittels künstlich neuronalen Netzwerken. Die Recheneinheit ist als system on the chip in der Kamera integriert oder Teil einer elektronischen Steuereinheit, im Englischen electronic control unit, abgekürzt ECU, genannt. Die ADAS-Kamera ist ausgeführt, eine Szenerie als eine Sequenz von Einzelaufnahmen zu erfassen. Aufgrund der Verwendung im automotive Bereich ist die ADAS-Kamera ausgeführt, die Anforderungen der funktionalen Sicherheit gemäß ISO26262 zu erfüllen. Beispielsweise erfüllt die ADAS-Kamera die Anforderungen des ASIL B Levels. Ferner ist die ADAS-Kamera derart spezifiziert, dass Sollfunktionen der ADAS-Kamera, zum Beispiel Erkennung einer Person als Person oder Erkennung eines vorausfahrenden LKWs mit Relativgeschwindigkeit null relativ zum Egofahrzeug als fahrender LKW und nicht als stationäres Hindernis, hinreichend sicher angesehen werden können. Neben Aspekten derfunktionalen Sicherheit erfüllt die ADAS-Kamera damit auch Aspekte der sogenannten safety of the intended functionality, abgekürzt SOTIF. Das Sichtfeld der ADAS-Kamera ist ein zweidimensionales, von der ADAS-Kamera beabstandetes Feld innerhalb des Objekt seitigen Volumen, das erfasst, das heißt mit der ADAS-Kamera ausreichend scharf abgebildet, werden kann. Die ADAS-Kamera ist damit eine sehr spezielle Kamera, die ausgeführt ist, Anforderungen von funktionaler Sicherheit und SOTIF zu erfüllen. Ein ADAS-Kamerasystem ist ein System, das zusätzlich zu einer ADAS-Kamera wenigstens eine weitere Komponente, zum Beispiel ein Steuergerät, umfasst. Die ADAS-Kamera ist bei Verwendung vorzugsweise in dem Innenraum des Fahrzeuges angeordnet. Besonders bevorzugt ist die ADAS-Kamera eine ADAS-Frontkamera, die im vorderen Bereich eines Innenraums des Fahrzeuges angeordnet ist. Alternativ ist die ADAS-Kamera im hinteren Bereich des Innenraums angeordnet mit Sichtfeld nach hinten, wobei die Verdunkelungsvorrichtung an der Innenseite der Heckscheibe anordenbar ist.

Eine Frontscheibe eines Fahrzeuges ermöglicht dem Führer eines Fahrzeuges die Sicht nach vorne und schützt vor Wind, Wetter und Partikeln im Luftstrom. Die Frontscheibe wird auch Windschutzscheibe genannt. Entsprechend ermöglicht die Heckscheibe dem Führer des Fahrzeuges die Sicht nach hinten. Frontscheiben und/oder Heckscheiben können eine Scheibenheizung aufweisen, beispielsweise in Form von dünnen, in das Glas der Scheibe eingelassenen Drähten, die die Sicht möglichst wenig beeinträchtigen.

Ein Flüssigkristall, im Englischen liquid crystal, abgekürzt LC, genannt, ist ein anisotropes Fluid und damit ein Fluid, welches für unterschiedliche Polarisationsrichtungen von einfallendem Licht verschiedene Ausbreitungsgeschwindigkeiten in verschiedenen Richtungen aufweist. Aufgrund der Anisotropie beeinflussen Flüssigkristalle die Polarisationsrichtung von Lichtwellen. Eine Welle ist polarisiert, wenn die Auslenkung der Welle eine bestimmte Orientierung zu der Ausbreitungsgeschwindigkeit der Welle hat. Eine Welle ist linear polarisiert, wenn ihre Auslenkung nur eine Richtung senkrecht zur Ausbreitungsrichtung der Welle annimmt. Bei einer zirkular polarisierten Welle läuft die Polarisationsrichtung auf einem Kreis. Bei einer zirkular polarisierten Welle treten im zeitlichen Wechsel alle Polarisationsrichtungen auf.

Eine Flüssigkristallzelle umfasst einen Flüssigkristall und Mittel zum Anlegen einer elektrischen Spannung, um Atome oder Moleküle des Flüssigkristalls anzusteuern. Die elektrische Spannung kann aus einem elektrischen oder einem magnetischen Feld resultieren. Das Feld kann ein Gleichfeld oder ein Wechselfeld sein. Atome oder Moleküle von Flüssigkristallen besitzen in der Regel eine stäbchen- oder scheibenförmige Form. Eine Flüssigkristallzelle umfasst zum Beispiel zwei Platten, wobei die Struktur der Plattenoberflächen eine jeweilige Vorzugsrichtung besitzt. Beispielsweise umfasst die Flüssigkristallzelle zwei jeweils mit parallelen Rillen versehene Platten, wobei die Richtungen der Rillen in den Platten um 90° zueinander gedreht sind. Vorzugsweise sind beide Platten lichtdurchlässig. Besonders bevorzugt sind beide Platten jeweils Glasplatten. Die Platten umfassen Anschlussleitungen zum Anlegen einer elektrischen Spannung an die Platten. Zum Beispiel sind die Außenseiten der Glasplatten jeweils mit einer Elektrodenschicht mit Anschlussleitungen überzogen zum Ansteuern der Flüssigkristallzelle. Zwischen den Glasplatten ist der Flüssigkristall angeordnet. Der Flüssigkristall umfasst vorzugsweise eine nematische Verbindung. Eine nematische Verbindung hat die Eigenschaft, dass Bestandteile der nematischen Verbindung bei Anlegen eines Feldes sich in Richtung des Feldes anordnen. Diese Anordnung entspricht einem Plattenkondensator, dessen Dielektrikum die Flüssigkristallzelle ist. Entsprechend der 90° Verdrehung der Richtungen der Rillen in den Glasplatten ordnen sich die Atome oder Moleküle des Flüssigkristalls schraubenförmig. Diese Schraubenstruktur kann auch durch Beimischung von cholesterischen Verbindungen induziert sein. Cholesterische Verbindungen umfassen eine nematische Ordnung mit sich kontinuierlich drehender Vorzugsorientierung. Die Flüssigkristallzelle ist zwischen zwei ebenfalls um 90° verdrehte Polarisationsfiltern angeordnet. Eine Transmissionsachse des ersten Polarisationsfilters verläuft parallel zu der Richtung der Rillen der ersten Glasplatte. Eine Transmissionsachse des zweiten Polarisationsfilters verläuft parallel zu der Richtung der Rillen der zweiten Glasplatte. Der erste Polarisationsfilter entspricht damit einem Polarisator. Der zweite Polarisationsfilter entspricht damit einem Analysator. Liegt keine Spannung an, wird einfallendes Licht um 90° gedreht und passiert den Flüssigkristall. Liegt eine Spannung an, richten sich die Atome oder Moleküle des Flüssigkristalls senkrecht zu den Elektrodenoberflächen aus. Einfallendes Licht passiert den Flüssigkristall ungedreht. Aufgrund der um 90° verdrehten Anordnung der Polarisationsfilter wird damit einfallendes Licht absorbiert. Dieses Beispiel einer Flüssigkristallzelle entspricht der in CH 532 261 offenbarten Lichtsteuerzelle. Erfindungswesentlich ist, für den automotive Bereich eine Verdunkelungsvorrichtung bereitzustellen, die auf dem Prinzip der Flüssigkristalle aufbaut in Kombination mit einer ADAS-Kamera. Die Flüssigkristallzellen werden vorteilhafterweise so groß gestaltet, dass eine einzelne Flüssigkristallzelle oder ein Verbund der Größenordnung fünf benachbarter Flüssigkristallzellen der bildseitigen Größe der Sonne entspricht.

Eine Verzögerungsschicht oder Verzögerungsplatte oder Wellenplatte genannt ist ein optisches Bauelement aus einem anisotropen Material. Die Polarisationsrichtung des Lichts, bei der die Lichtwelle eine größere Ausbreitungsgeschwindigkeit hat, heißt schnelle Achse, die dazu senkrecht angeordnete Richtung langsame Achse. Licht, welches parallel zur schnellen Achse polarisiert ist, passiert die Verzögerungsschicht schneller als Licht, das dazu senkrecht polarisiert ist. Nach Durchlaufen der Verzögerungsschicht weisen damit zwei linear polarisierte Komponenten des Lichts eine Phasenverschiebung zueinander auf. Damit ändert die Verzögerungsschicht die Polarisation und Phase von durchtretendem Licht. Zum Beispiel besitzt Quarz die Eigenschaften einer Verzögerungsschicht. Die Verzögerungsschicht stellt sicher, dass Licht unabhängig von einer Ausrichtung der Flüssigkristallzellen relativ zu der ADAS-Kamera die ADAS Kamera erreicht. Ohne die Verzögerungsschicht würde beispielsweise nur das von den Flüssigkristallzellen linear polarisierte Licht die ADAS-Kamera erreichen und in bestimmten Bauelementen von der ADAS-Kamera zu falschen Messergebnissen führen. Falls die ADAS-Kamera einen Polarisationsfilter umfasst und die Flüssigkristallzellen derart zu der ADAS-Kamera angeordnet sind, dass das von den Flüssigkristallzellen linear polarisierte Licht von dem Polarisationsfilter der ADAS-Kamera absorbiert wird, erhält die ADAS-Kamera kein Licht mehr. Durch die Verzögerungsschicht werden diese Probleme gelöst.

Da die ADAS-Kamera in der Regel nah zu der Frontscheibe oder der Heckscheibe angeordnet ist, ist das Sichtfeld der ADAS-Kamera auf der Innenseite relativ klein. Damit muss die Verdunkelungsvorrichtung nur so groß gewählt werden, dass ein relativ kleiner Bereich der Innenseite überdeckt wird. Die Verdunkelungsvorrichtung muss nicht die gesamte Innenseite überdecken. Damit ist die erfindungsgemäße Verdunkelungsvorrichtung günstiger und schneller zu fertigen als Vorrichtungen, die die gesamte Innenseite eines Fensters überdecken. Zu beachten ist auch, dass die kristalline Struktur von Flüssigkristallen bei tiefen Temperaturen träge ist. Dieser Effekt ist umso deutlicher ausgeprägt, je größer die Verdunkelungsvorrichtung ist. Bei der erfindungsgemäßen relativ kleinen Verdunkelungsvorrichtung ist dieser Effekt vorteilhafterweise wenig ausgeprägt.

Ein wesentlicher Vorteil der Erfindung ist es, dass kostengünstige Kameras im ADAS-System eingesetzt werden können, da sie nicht die Merkmale einer HDR-Funktionalität, das heißt eines High Dynamic Range imagers, aufweisen müssen.

Die Einzelansteuerbarkeit der Flüssigkristallzellen ergibt eine selektiv und zugleich dynamisch ansteuerbare Verdunkelungsvorrichtung. Es brauchen also nicht alle Flüssigkristallzellen der Verdunkelungsvorrichtung angesteuert werden um einen Bildausschnitt des Bildsensors der ADAS-Kamera zu verdunkeln. Es genügt, lediglich die Flüssigkristallzellen anzusteuern, die einen zur aktuellen Sonnenposition entsprechenden Bildausschnitt der ADAS-Kamera verdunkeln. Insbesondere kann durch die dynamische Ansteuerung auf eine Änderung der Sonnenposition entsprechend reagiert werden.

Da die Flüssigkristallzellen erst bei Anliegen einer Spannung Licht absorbieren, kann Licht bei einem Spannungswegfall die ADAS-Kamera erreichen und ist damit konform mit funktionaler Sicherheit. Würden die Flüssigkristallzellen umgekehrt Licht erst bei Anliegen einer Spannung passieren lassen, würde die ADAS-Kamera bei einem Spannungswegfall die Umgebung nicht mehr erfassen können.

Weitere Vorteile der erfindungsgemäßen Verdunkelungsvorrichtung sind die sich ergebende gesteigerte Rohbildgüte, die gesteigerte Performanz des Bildsensors der ADAS-Kamera und die verbesserte Verfügbarkeit des Bildsensors, insbesondere bei Sonnenblendungen.

Ein weiterer wesentlicher Vorteil der zugrunde liegenden Erfindung ist es, Flächen verdunkeln zu können. Insbesondere bei großen Sichtkegeln der Kameras sind speziell beschichtete und geometrisch geformten Streulichtblenden weniger wirksam. Die Flüssigkristallschicht löst diese Probleme.

Vorzugsweise ist die Verzögerungsschicht auf der von der Innenseite abgewandten Seite der Schicht angeordnet. Damit ist die Verzögerungsschicht eine Baueinheit umfassend die Schicht mit Flüssigkeitskristallen und die auf diese Schicht angeordnete Verzögerungsschicht.

Bevorzugt ist die Verzögerungsschicht eine λ/4-Verzögerungsschicht. Trifft ein Lichtstrahl mit einem linear polarisierten Anteil, dessen Polarisationsrichtung um π/4 zur kristalloptischen Achse gedreht ist, auf die λ/4-Verzögerungsschicht, dann entsteht zirkular polarisiertes Licht, das dann auf die ADAS-Kamera trifft. Da im zirkular polarisierten Licht im zeitlichen Wechsel alle Polarisationsrichtungen auftreten, treten in Bauelementen der ADAS-Kamera keine Messfehler mehr auf.

In einer weiteren Ausgestaltung der Erfindung ist die Verdunkelungsvorrichtung derart an der Innenseite anordenbar ist, dass die Verdunkelungsvorrichtung in Wirkverbindung mit einer Scheibenheizung ist. Alternativ umfasst die Verdunkelungsvorrichtung ein Heizelement. Die Scheibenheizung oder das Heizelement dienen jeweils zum Aufwärmen der Flüssigkristallzellen. In Kombination mit der Scheibenheizung oder dem Heizelement wird die Temperaturabhängigkeit der Flüssigkristalle minimiert. Damit lassen sich die Flüssigkristalle auch bei tiefen Temperaturen schnell schalten.

Bevorzugt umfassen die Flüssigkristalle der Flüssigkristallzellen eine organische Verbindung. Die organische Verbindung umfasst beispielsweise Moleküle aus Wasserstoff, Kohlenstoff und/oder Sauerstoffatomen. Mit organischen Verbindungen lassen sich auch andere als stäbchen- oder scheibenförmige Flüssigkristalle realisieren, um optische Eigenschaften zu verbessern.

Das erfindungsgemäße Steuergerät für ein ADAS-Kamerasystem. Das ADAS-Kamerasystem umfasst eine ADAS-Kamera und eine erfindungsgemäße Verdunkelungsvorrichtung. Das Steuergerät umfasst eine erste Schnittstelle. Über die erste Schnittstelle wird eine Position der Sonne auf einem Bildsensor der ADAS-Kamera erhalten. Das Steuergerät umfasst ferner eine Recheneinheit. Die Recheneinheit bestimmt in Abhängigkeit der Position der Sonne auf dem Bildsensor und in Abhängigkeit extrinsischer und intrinsischer Parameter der ADAS-Kamera die Flüssigkristallzellen der Verdunkelungsvorrichtung, die bei Anliegen einer Spannung die Position der Sonne auf dem Bildsensor verdunkeln. Außerdem umfasst das Steuergerät eine zweite Schnittstelle, um eine Spannung an die von der Recheneinheit bestimmten Flüssigkristallzellen anzulegen. Je nach Größe der einzelnen Flüssigkristallzellen wird dabei eine einzelne Flüssigkristallzelle oder ein Verbund benachbarter Flüssigkristallzellen angesteuert.

Das Steuergerät ist insbesondere eine ECU. Das Steuergerät ermöglicht, eine Veränderung der Sonnenposition, wie sie beispielsweise auftritt, wenn ein Fahrzeug, bei dem der Gegenstand der Erfindung verwendet wird, hier Ego-Fahrzeug genannt, eine Kurvenbewegung ausführt, auf Ebene der Flüssigkristallzellen nachzuverfolgen. Während der Bewegung in Kurven des Ego-Fahrzeuges wandert die Sonne in der Bildebene der ADAS-Kamera. Das Steuergerät trackt die Sonnenposition und steuert die Flüssigkristallzellen entsprechend selektiv und dynamisch an.

Eine Schnittstelle ist ein Bauteil zwischen wenigstens zwei Funktionseinheiten, an der ein Austausch von logischen Größen, zum Beispiel Daten, oder physikalischen Größen, zum Beispiel elektrischen Signalen, erfolgt, entweder nur unidirektional oder bidirektional. Der Austausch kann analog oder digital erfolgen. Der Austausch kann ferner drahtgebunden oder drahtlos erfolgen. Beispielsweise ist die Schnittstelle eine kabelgebundene Schnittstelle oder eine WLAN Schnittstelle.

Eine Recheneinheit ist eine elektronische Einheit, die eingehende Informationen, vorzugsweise gemäß eines bestimmten Algorithmus, bearbeitet und ein Ergebnis aus dieser Bearbeitung ausgibt. Elektronische Schaltungen mit Logikbausteinen sind Beispiele für eine Recheneinheit. Ein Prozessor ist ein weiteres Beispiel für eine Recheneinheit.

Intrinsische Paramater der ADAS-Kamera legen fest, wie optische Messungen des Bildsensors der ADAS-Kamera und Bildpunkten, insbesondere Pixelwerte, des Bildsensors zusammenhängen. Beispielswiese ist die Brennweite einer Optik oder die Pixeldichte des Bildsensors intrinsische Parameter der ADAS-Kamera. Extrinsische Parameter sind äußere Parameter der ADAS-Kamera, zum Beispiel geometrische Anordnung der ADAS-Kamera im Raum. Zum Beispiel ist die Position eines Rückspiegels und die Position einer Fixierung der ADAS-Kamera an dem Rückspiegel extrinsische Parameter der ADAS-Kamera. Mit Kenntnis der extrinsischen und intrinsischen Parameter der ADAS-Kamera und der Sonnenposition in der realen Welt bzw. auf dem Bildsensor, die die Recheneinheit über die erste Schnittstelle erhält, erstellt die Recheneinheit eine eins zu eins Zuordnung zwischen Flüssigkristallzellen und Pixeln des Bildsensors. Damit kann das Steuergerät mittels der zweiten Schnittstelle die Flüssigkristallzellen gezielt ansteuern.

Die Ansteuerung der Flüssigkristallzellen, das heißt das Anlegen von elektrischer Spannung, erfolgt vorteilhafterweise mit einer Modulierfrequenz, die verschieden ist von der Frequenz der Bilderfassung der ADAS-Kamera. Dadurch werden Störeffekte, wie zum Beispiel optisches Flimmern, im Wesentlichen vermieden.

Das erfindungsgemäße ADAS-Kamerasystem umfasst eine ADAS-Kamera. Ferner umfasst das ADAS-Kamerasystem eine erfindungsgemäße Verdunkelungsvorrichtung. Außerdem umfasst das ADAS-Kamerasystem wenigstens ein erfindungsgemäßes erstes und ein erfindungsgemäßes zweites Steuergerät. Das erste Steuergerät ist ausgeführt, einen ersten Anteil der Flüssigkristallzellen anzusteuern. Das zweite Steuergerät ist ausgeführt, einen zweiten Anteil der Flüssigkristallzellen unabhängig von dem ersten Steuergerät anzusteuern. Mit zwei Steuergeräten wird die Redundanz des ADAS-Kamerasystems erhöht. Fällt beispielsweise das erste Steuergerät elektrisch bedingt aus, geht damit nicht die Steuerung der kompletten Flüssigkristallzellen verloren. Lediglich der erste Anteil der Flüssigkristalle ist nicht mehr ansteuerbar. Mittels des zweiten Steuergeräts ist aber immer noch der zweite Anteil der Flüssigkristallzellen ansteuerbar. Damit kann auch bei einem Ausfall eines Steuergeräts immer noch eine Verdunkelung erreicht werden. Speziell in einer matrixförmigen Anordnung der Flüssigkeitszellen werden die Flüssigkeitszellen in einer Zeile alternierend von dem ersten und dem zweiten Steuergerät angesteuert.

Vorzugsweise ist die Verdunkelungsvorrichtung an der ADAS-Kamera angeordnet. Damit kann der Gegenstand der Erfindung vorteilhafterweise auch für eine außerhalb des Innenraums des Fahrzeuges angeordnete ADAS-Kamera verwendet werden, zum Beispiel für eine ADAS-Rückfahrkamera, die an einem Nummernschild des Fahrzeuges montierbar ist, oder für einen ADAS-Seitenkamera, die an einem Seitenspiegel des Fahrzeuges montierbar ist.

Das erfindungsgemäße Fahrzeug umfasst ein erfindungsgemäßes ADAS-Kamerasystem. Die ADAS-Kamera ist an einem Rückspiegel des Fahrzeuges angeordnet. Die Verdunkelungsvorrichtung ist an einer Innenseite einer Frontscheibe oder Heckscheibe des Fahrzeuges im Sichtfeld der ADAS-Kamera angeordnet. Das erste und das zweite Steuergerät sind in der ADAS-Kamera oder der Verdunkelungsvorrichtung integriert. Es ergeben sich die oben beschriebenen Vorteile.

Die Erfindung wird in den folgenden Ausführungsbeispielen und Figuren beispielhaft erläutert. Es zeigen:
- Fig. 1: ein Ausführungsbeispiel eines erfindungsgemäßen Fahrzeuges,
- Fig. 2: ein Ausführungsbeispiel einer erfindungsgemäßen Verdunkelungsvorrichtung,
- Fig. 3: ein Ausführungsbeispiel eines erfindungsgemäßen ADAS-Kamerasystems und
- Fig. 4: ein Ausführungsbeispiel einer Flüssigkristallzelle.

In den Figuren bezeichnen gleiche Bezugszeichen gleiche oder wenigstens ähnliche Bezugsteile. Übersichtshalber sind in den einzelnen Figuren nur die für die jeweilige Figur relevanten Bezugszeichen angegeben.

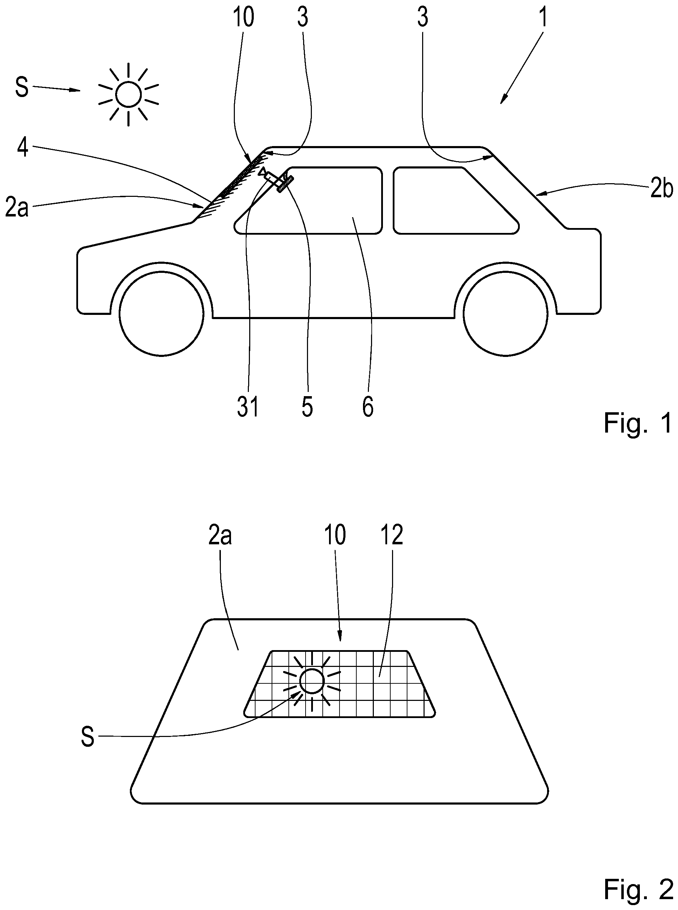

Fig. 1 zeigt ein Fahrzeug 1. Das Fahrzeug 1 ist ein Personenkraftwagen. Der Gegenstand der Erfindung kann aber auch bei anderen Landfahrzeugen, beispielsweise Lastkraftwagen, und/oder Schienenfahrzeugen, Luftfahrzeugen und/oder Wasserfahrzeugen analog eingesetzt werden. Das Fahrzeug 1 umfasst eine Frontscheibe 2a und eine Heckscheibe 2b. Die Frontscheibe 2a und/oder die Heckscheibe 2b umfassen eine Scheibenheizung 4. In Fig. 1 ist lediglich die Scheibenheizung 4 für die Frontscheibe 2a gezeigt. Das Fahrzeug 1 umfasst einen Innenraum 6. In dem Innenraum 6 nehmen Fahrgäste ihren Platz ein. In dem Innenraum 6 ist ein Rückspiegel 5 angeordnet. Mittels des Rückspiegels 5 beobachtet ein Fahrzeugführer den rückwärtigen Verkehr durch die Heckscheibe 2b.

Auf dem Rückspiegel 5 ist eine ADAS-Kamera 31 angeordnet mit Sichtfeld in Richtung Frontscheibe 2a. Die ADAS-Kamera 31 ist beispielsweise eine Monokamera mit nur einer Linse oder eine Trikamera mit drei Linsen unterschiedlicher Brennweiten und/oder Öffnungswinkel. An einer Innenseite 3 der Frontscheibe 2a ist eine Verdunkelungsvorrichtung 10 angeordnet. Die Verdunkelungsvorrichtung 10 ist in dem Sichtfeld der ADAS-Kamera 31 auf der Innenseite 3 angeordnet und besitzt eine Größe, die diesem Sichtfeld entspricht. Die Verdunkelungsvorrichtung 10 ist planar bündig auf der Innenseite 3 der Frontscheibe 2a angeordnet. Die Sonne S scheint durch die Frontscheibe 2a auf die ADAS-Kamera 31 ein. Ohne die erfindungsgemäße Verdunkelungsvorrichtung 10 würden in der ADAS-Kamera 31, insbesondere auf einem Bildsensor 32 der ADAS-Kamera 31, starke Blendungen durch die Sonne S hervorgerufen werden und/oder Lichtschwerter oder eingeschlossene Reflexionen im Bereich von Streulichtblenden und/oder in einer Linse der ADAS-Kamera 31 entstehen. Durch die selektive Ansteuerung einzelner Flüssigkristallzellen 12 der Verdunkelungsvorrichtung 10 werden diese durch die Einstrahlung der Sonne S verursachten Probleme vermieden.

Fig. 2 zeigt die Verdunkelungsvorrichtung 10 aufgebracht auf der Innenseite 3 der Frontscheibe 2a. Die Verdunkelungsvorrichtung 10 besitzt die Form eines Trapezes. Die Flüssigkristallzellen 12 sind in Reihen und Spalten in Form einer Matrix angeordnet. Durch die erfindungsgemäße Ansteuerung der Verdunkelungsvorrichtung 10 werden diejenigen Flüssigkristallzellen 12 mit einer elektrischen Spannung beaufschlagt und wirken infolge dessen Licht absorbierend, die eine Verdunkelung des Bereichs der bildseitigen Größe der Sonne S ergeben. In Fig. 2 überdeckt eine aktuelle Position der Sonne S vier Flüssigkristallzellen 12. Es werden also diese vier Flüssigkristallzellen 12 angesteuert und damit verdunkelt.

Je nach Position der Sonne S oder der bildseitigen Größe der Sonne S sind mehr oder weniger Flüssigkristallzellen 12 anzusteuern, um die Sonne zu überdecken. Wandert die Sonne S auf der Verdunkelungsvorrichtung 10, beispielsweise in einer Kurvenfahrt des Fahrzeuges 1, wird die Verdunkelungsvorrichtung 10 derart beschaltet, dass die verdunkelten Flüssigkristallzellen 12 entsprechend mit der Sonne S mitwandern, sodass die Sonne S u jedem Zeitpunkt der Kurvenfahrt verdunkelt ist.

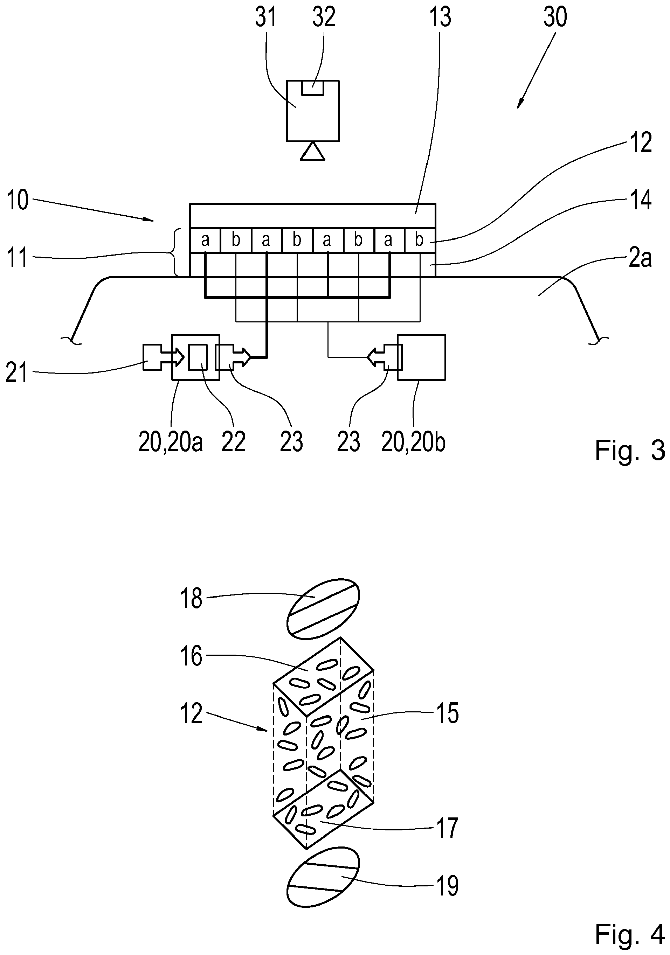

Fig. 3 zeigt ein ADAS-Kamerasystem 30. Das ADAS-Kamerasystem 30 umfasst die ADAS-Kamera 31 und die erfindungsgemäße Verdunkelungsvorrichtung 10. Die Verdunkelungsvorrichtung 10 umfasst ein separates Heizelement 14, mit dem die Verdunkelungsvorrichtung 10 auf der Innenseite 3 der Frontscheibe 2a aufliegt. Eine Verzögerungsschicht 13 ist zwischen der Innenseite 3 der Frontscheibe 2a und der ADAS-Kamera 31 angeordnet. Zwischen dem Heizelement 14 und der Verzögerungsschicht 13 sind die Flüssigkristallzellen 12 angeordnet. Die Flüssigkristallzellen 12 bilden mit dem Heizelement 14 eine Schicht 11, auf die die Verzögerungsschicht 13 angeordnet ist. Die Flüssigkristallzellen 12 der Schicht 11 werden mit einem Steuergerät 20 angesteuert, das heißt mit einer elektrischen Spannung moduliert beaufschlagt und damit ein- und ausgeschaltet.

Dabei steuert ein erstes Steuergerät 20a die mit a bezeichneten Flüssigkristallzellen 12. Ein zweites Steuergerät 20b steuert die mit b bezeichneten Flüssigkristallzellen 12. Fällt das erste Steuergerät 20a aus, sind die Flüssigkristallzellen a transparent. Die Flüssigkristallzellen b können weiterhin mit dem Steuergerät 20b ein- und ausgeschaltet und damit verdunkelt werden. Entsprechendes gilt für einen Ausfall des zweiten Steuergeräts 20b. Das erste Steuergerät 20a und das zweite Steuergerät 20b sind vorteilhafterweise in einem Gehäuse der ADAS-Kamera 31 platzsparend angeordnet.

Das Steuergerät 20, 20a, 20b umfasst eine erste Schnittstelle 21 zu dem Bildsensor 32 der ADAS-Kamera 31. Über die erste Schnittstelle 21 erhält eine Recheneinheit 22 des Steuergeräts 20, 20a, 20b eine Position der Sonne S auf dem Bildsensor 32 der ADAS-Kamera 31, zum Beispiel in Form einer Information, welche Pixel des Bildsensors 32 von der Sonne S erfasst sind. Die Recheneinheit 22 bestimmt in Abhängigkeit der Position der Sonne S auf dem Bildsensor 32 und in Abhängigkeit extrinsischer und intrinsischer Parameter der ADAS-Kamera 31 die Flüssigkristallzellen 12 der Verdunkelungsvorrichtung 10, die bei Anliegen einer Spannung die Position der Sonne S auf dem Bildsensor 32 verdunkeln. Ferner umfasst das Steuergerät 20, 20a, 20b eine zweite Schnittstelle 23 zu den Flüssigkristallzellen 12. Mittels der zweiten Schnittstelle 23 wird elektrische Spannung an diese von der Rechen-einheit 22 bestimmten Flüssigkristallzellen 12 angelegt.

Fig. 4 zeigt eine Flüssigkristallzelle 12 ohne Anliegen einer elektrischen Spannung. Der Flüssigkristall 15 ist zwischen einer ersten Platte 16 und einer zweiten Platte 17 angeordnet. Der Flüssigkristall 15 besitzt in Bezug auf die zu der ersten Platte 16 und der zweiten Platte 17 senkrechte Richtung eine schraubenförmig verwundene Anordnung von beispielsweise stäbchenförmigen Molekülen. Die erste Platte 16 und die zweite Platte 17 üben durch die Struktur ihrer dem Flüssigkristall 15 zugewandten Oberflächen eine Richtkraft auf die Moleküle des Flüssigkristalls 15 aus. Durch diese Richtkraft werden die Moleküle des Flüssigkristalls 15 parallel zur Oberfläche der jeweiligen Platte 16, 17 in eine bestimmte Richtung orientiert. Die Flüssigkristallzelle 12 wird zwischen einen Polarisator 18 und einen Analysator 19 angeordnet. Bei Anliegen einer Spannung wird ein zu den Platten 16, 17 senkrechtes elektrisches Feld erzeugt und Moleküle des Flüssigkristalls ordnen sich in Feldrichtung aus, bis sie bei zunehmender Spannung parallel zum Feldvektor angeordnet sind. Damit verschwindet die Schraubenstruktur.

### Bezugszeichen

- 1: Fahrzeug
- 2a: Frontscheibe
- 2b: Heckscheibe
- 3: Innenseite
- 4: Scheibenheizung
- 5: Rückspiegel
- 6: Innenraum
- 10: Verdunkelungsvorrichtung
- 11: Schicht
- 12: Flüssigkristallzellen
- 13: Verzögerungsschicht
- 14: Heizelement
- 15: Flüssigkristall
- 16: erste Platte
- 17: zweite Platte
- 18: Polarisator
- 19: Analysator
- 20: Steuergerät
- 20a: erstes Steuergerät
- 20b: zweites Steuergerät
- 21: erste Schnittstelle
- 22: Recheneinheit
- 23: zweite Schnittstelle
- 30: ADAS-Kamerasystem
- 31: ADAS-Kamera
- 32: Bildsensor
- S: Sonne
- a: Flüssigkristallzelle
- b: Flüssigkristallzelle

## Patentansprüche

1. Verdunkelungsvorrichtung (10) für eine ADAS-Kamera (31), wobei eine Flächengröße der Verdunkelungsvorrichtung (10) gleich der Größe des Sichtfeldes der ADAS-Kamera (31) auf einer Innenseite (3) einer Frontscheibe (2a) oder Heckscheibe (2b) eines Fahrzeuges (1) ist, umfassend
• eine an der Innenseite (3) anordenbare Schicht (11) umfassend Flüssigkristallzellen (12), wobei die Flüssigkristallzellen (12) einzeln ansteuerbar sind und bei Anliegen einer Spannung Licht absorbieren, um in Abhängigkeit einer von der ADAS-Kamera (31) erfassten Sonnenposition ein Bildausschnitt der ADAS-Kamera (31) zu verdunkeln,
• eine Verzögerungsschicht (13), angeordnet zwischen der Schicht (11) und der ADAS-Kamera (31), um der ADAS-Kamera (31) Licht unabhängig von einer Ausrichtung der Flüssigkristallzellen (12) relativ zu der ADAS-Kamera (31) bereitzustellen.

2. Verdunkelungsvorrichtung (10) nach Anspruch 1, wobei die Verzögerungsschicht (13) auf der von der Innenseite (3) abgewandten Seite der Schicht (11) angeordnet ist.

3. Verdunkelungsvorrichtung (10) nach Anspruch 1 oder 2, wobei die Verzögerungsschicht (13) eine λ/4-Verzögerungsschicht ist.

4. Verdunkelungsvorrichtung (10) nach einem der vorangehenden Ansprüche, wobei die Verdunkelungsvorrichtung (10) derart an der Innenseite (3) anordenbar ist, dass die Verdunkelungsvorrichtung (10) in Wirkverbindung mit einer Scheibenheizung (4) ist oder die Verdunkelungsvorrichtung (10) ein Heizelement (14) umfasst zum Aufwärmen der Flüssigkristallzellen (12).

5. Verdunkelungsvorrichtung (10) nach einem der vorangehenden Ansprüche, wobei die Flüssigkristalle (15) der Flüssigkristallzellen (12) eine organische Verbindung umfassen.

6. Steuergerät (20, 20a, 20b) für ein ADAS-Kamerasystem (30) umfassend eine ADAS-Kamera (31) und eine Verdunkelungsvorrichtung (10) nach einem der Ansprüche 1 bis 5 umfassend
• eine erste Schnittstelle (21), um eine Position der Sonne (S) auf einem Bildsensor (32) der ADAS-Kamera (31) zu erhalten,
• eine Recheneinheit (22), um in Abhängigkeit der Position der Sonne (S) auf dem Bildsensor (32) und in Abhängigkeit extrinsischer und intrinsischer Parameter der ADAS-Kamera (31) die Flüssigkristallzellen (12) der Verdunkelungsvorrichtung (10) zu bestimmen, die bei Anliegen einer Spannung die Position der Sonne (S) auf dem Bildsensor (32) verdunkeln, und
• eine zweite Schnittstelle (23), um eine Spannung an diese von der Recheneinheit (22) bestimmten Flüssigkristallzellen (12) anzulegen.

7. ADAS-Kamerasystem (30) umfassend
• eine ADAS-Kamera (31),
• eine Verdunkelungsvorrichtung (10) nach einem der Ansprüche 1 bis 5 und
• wenigstens ein erstes und ein zweites Steuergerät (20a, 20b) jeweils nach Anspruch 6,
wobei das erste Steuergerät (20a) ausgeführt ist, einen ersten Anteil der Flüssigkristallzellen (12) anzusteuern, und das zweite Steuergerät (20b) ausgeführt ist, einen zweiten Anteil der Flüssigkristallzellen (12) unabhängig von dem ersten Steuergerät (20a) anzusteuern.

8. ADAS-Kamerasystem (30) nach Anspruch 7, wobei die Verdunkelungsvorrichtung (10) an der ADAS-Kamera (31) angeordnet ist.

9. Fahrzeug (1) umfassend ein ADAS-Kamerasystem (30) nach Anspruch 7, wobei
• die ADAS-Kamera (31) an einem Rückspiegel (5) des Fahrzeuges (1) angeordnet ist,
• die Verdunkelungsvorrichtung (10) an einer Innenseite (3) einer Frontscheibe (2a) oder Heckscheibe (2b) des Fahrzeuges (1) im Sichtfeld der ADAS-Kamera (31) angeordnet ist und
• das erste und das zweite Steuergerät (20a, 20b) in der ADAS-Kamera (31) oder der Verdunkelungsvorrichtung (10) integriert sind.
